# EUROPEAN PATENT APPLICATION

(11) **EP 4 195 842 A1**
(43) Date of publication of application: **14.06.2023**
(21) Application number: 21852837.0
(22) Date of filing: 10.05.2021
(51) Int. Cl.: H04W 72/12, H04W 72/04, H04W 84/12

(54) **COMMUNICATION DEVICE, METHOD FOR CONTROLLING COMMUNICATION DEVICE, AND PROGRAM**

(30) Priority: 04.08.2020 JP 2020132538
(71) Applicant: CANON KABUSHIKI KAISHA, Tokyo 146-8501 (JP)
(72) Inventor: KOMORIYA Mitsuo, Tokyo 146-8501 (JP)
(74) Representative: Canon Europe Limited
(86) International application number: PCT/JP2021/017612
(87) International publication number: WO 2022/030058

(57) **Abstract**

In the present invention, a communication device compliant with the IEEE802.11 series standards is capable of communicating in a first mode in which transmission and reception are performed independently in individual frequency bands, or in a second mode in which transmission or reception is performed simultaneously in individual frequency bands. When it has been determined that a certain condition relating to the communication mode has been met during communication with a first other communication device using each of a plurality of frequency bands in the first or the second mode, the communication device determines, on the basis of the plurality of frequency bands, a plurality of frequency bands in which to perform communication in the post-change communication mode, and communicates with the first other communication device in the post-change communication mode using the determined plurality of frequency bands.

## Description

### TECHNICAL FIELD

The present invention relates to wireless communication techniques.

### BACKGROUND ART

In recent years, the amount of Internet usage has been growing as information communication technology develops, and a variety of communication technologies are being developed to meet the increase in demand. Among these, wireless local area network (WLAN) technology has improved the throughput of Internet communications such as packet data, voice, and video by terminal devices, and various technological developments are currently underway.

Numerous standardization efforts by the Institute of Electrical and Electronics Engineers (IEEE) 802, the standardization organization for WLAN technology, have played an important role in the development of WLAN technology. The IEEE 802.11 series of standards are known as one of the standard WLAN communication standards, and include the IEEE 802.11n/a/b/g/ac, IEEE 802.11ax, and other standards (PTL 1). For example, 802.11ax uses Orthogonal Frequency Division Multiple Access (OFDMA) to achieve high peak throughput of up to 9.6 gigabits per second (Gbps), as well as higher communication speeds under congested conditions.

Recently, a task group called IEEE 802.11be was launched as a successor standard to further improve throughput, frequency utilization efficiency, and communication latency. In IEEE 802.11be, multi-link techniques are being considered to transmit to a single STA (station/terminal device) using a plurality of frequency bands (radio channels) in the 2.4 GHz, 5 GHz, and 6 GHz bands simultaneously. Thus far, STAs compliant with the IEEE 802.11 standard have been connected to an access point (AP) and communicated data with the access point over a single frequency band. Multi-link techniques make it possible to improve throughput by having APs and STAs communicate data over at least two radio channels simultaneously.

### CITATION LIST

### PATENT LITERATURE

PTL 1: Japanese Patent Laid-Open No. 2018-50133

### SUMMARY OF INVENTION

### TECHNICAL PROBLEM

Communication using multi-link techniques (multi-link communication) includes a plurality of communication modes. For example, there is an asynchronous mode in which APs and STAs transmit and receive independently over a plurality of frequency bands, and a synchronous mode in which APs and STAs transmit and receive synchronously over a plurality of frequency bands. There is also a semi-asynchronous mode which uses the synchronous mode or the asynchronous modes depending on the situation.

The asynchronous mode is a mode in which the AP and STA transmit and receive independently in each frequency band used, and each device (AP and STA) may transmit and receive simultaneously. When the same device transmits and receives simultaneously, if there is only a small interval between the respective frequency bands used for transmission and reception, the transmitted signal may enter into the reception circuit as radio interference, causing intra-device interference that adversely affects the reception characteristics.
Therefore, frequency bands with small intervals such as those that cause intra-device interference cannot be used in the asynchronous mode. On the other hand, synchronous mode is a mode in which the AP and STA transmit or receive simultaneously in each frequency band used. It is therefore possible to use frequency bands with small intervals such as those where intra-device interference can occur. With respect to STAs, an STA that supports multi-link techniques will be called an "ML-STA", and an STA that does not support multi-link techniques will be called a "Non-ML-STA".

As described above, multi-link communication can improve throughput, but if the AP and an ML-STA are not communicating in the appropriate communication mode, throughput may decrease. For example, assume a state where the AP and the ML-STA are performing multi-link communication in the synchronous mode using a plurality of frequency bands at small intervals that cause intra-device interference. In this state, when a Non-ML-STA communicates with the AP using one frequency band, it is necessary for the ML-STA and the AP to consider intra-device interference in other frequency bands. In other words, in communication between the ML-STA and the AP using the stated other frequency bands, only transmission is possible when the AP is transmitting to the Non-ML-STA, whereas only reception is possible when the AP is receiving from the Non-ML-STA. As a result, communication downtime occurs in the ML-STA and the throughput drops.

In addition, when the AP and the ML-STA are performing multi-link communication in synchronous mode, it is not possible to transmit and receive simultaneously when used in an application where data is transmitted and received bidirectionally in real time. This has sometimes affected the use of the application.

Some embodiments of the present disclosure provide a technique for determining an appropriate frequency band for use in multi-link communication.

### SOLUTION TO PROBLEM

As one means for achieving the above object, a communication device according to the present invention is configured as follows. That is, the communication device is compliant with an IEEE 802.11 series standard, and includes: communication means for communicating in a communication mode among a first mode, in which transmission and reception are performed independently over each of frequency bands, and a second mode, in which transmission or reception is performed simultaneously over each of the frequency bands; judgment means for judging whether a predetermined condition pertaining to changing the communication mode is satisfied; and determination means for, when the judgment means judges that the predetermined condition is satisfied, determining at least one frequency band to be used for communication in the communication mode after the changing. When the judgment means judges that the predetermined condition is satisfied while the communication means is communicating with a first other communication device using each frequency band of a plurality of frequency bands in the first mode or the second mode, the determination means determines, based on the plurality of frequency bands, a plurality of frequency bands for performing communication in the communication mode after the changing, and the communication means communicates with the first other communication device in the communication mode after the changing using the plurality of frequency bands determined.

### ADVANTAGEOUS EFFECTS OF INVENTION

This makes it possible to determine an appropriate frequency band for use in multi-link communication.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of the configuration of a network.
FIG. 2A is a block diagram illustrating an example of the functional configuration of a communication device (an AP, an ML-STA).
FIG. 2B is a block diagram illustrating an example of the functional configuration of a communication device (a Non-ML-STA).
FIG. 3A is a block diagram illustrating an example of the hardware configuration of a communication device (the AP, the ML-STA).
FIG. 3B is a block diagram illustrating an example of the hardware configuration of a communication device (the Non-ML-STA).
FIG. 4 is a conceptual diagram illustrating a frequency interval value required to ensure intra-device interference does not occur.
FIG. 5 is a flowchart illustrating processing for connecting with an ML-STA executed by an AP in a first embodiment.
FIG. 6 is a sequence chart illustrating connection processing executed between an AP and an ML-STA in the first embodiment.
FIG. 7 is a diagram illustrating frequency intervals of links in the first embodiment.
FIG. 8 is a flowchart illustrating processing for connecting with a Non-ML-STA executed by an AP in the first embodiment.
FIG. 9 is a sequence chart illustrating connection processing executed between an AP and a Non-ML-STA in the first embodiment.
FIG. 10 is a conceptual diagram illustrating a frequency band change for a link in the first embodiment.
FIG. 11 is a flowchart illustrating frequency band change processing for a link after disconnection from a Non-ML-STA, executed by an AP, in the first embodiment.
FIG. 12 is a sequence chart illustrating frequency band change processing for a link after disconnection from a Non-ML-STA, in the first embodiment.
FIG. 13 is a flowchart illustrating processing for connecting with an ML-STA executed by an AP in a second embodiment.
FIG. 14 is a flowchart illustrating processing for connecting with a Non-ML-STA executed by an AP in the second embodiment.
FIG. 15 is a sequence chart illustrating connection processing between an AP and a Non-ML-STA in the second embodiment.
FIG. 16 is a sequence chart illustrating processing for re-changing a frequency band used based on a type of transmitted data in a third embodiment.
FIG. 17 is a sequence chart illustrating processing for re-changing a frequency band used based on a type of transmitted data in the third embodiment.
FIG. 18 is a sequence chart illustrating processing based on a type of transmitted data in a fourth embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In the following descriptions, frequency channels are defined according to the IEEE 802 series of standards, and channel numbers in the 2.4 GHz band, the 5 GHz band, and the 6 GHz band are not limited to those disclosed in the present specification, and may be any number (channel).

### First Embodiment

The present embodiment is an embodiment concerning processing for changing a link being used to a frequency band over which transmission and reception can be performed simultaneously when a Non-ML-STA connects to an AP in a state where the AP and an ML-STA are performing multi-link communication in communication modes including a synchronous mode. As described above, the ML-STA is an STA (station/terminal device) that supports a multi-link technique, whereas the Non-ML-STA is an STA that does not support a multi-link technique. "Link" refers to a frequency channel (frequency band) over which data can be transmitted and received.

### Configuration of Wireless Communication System

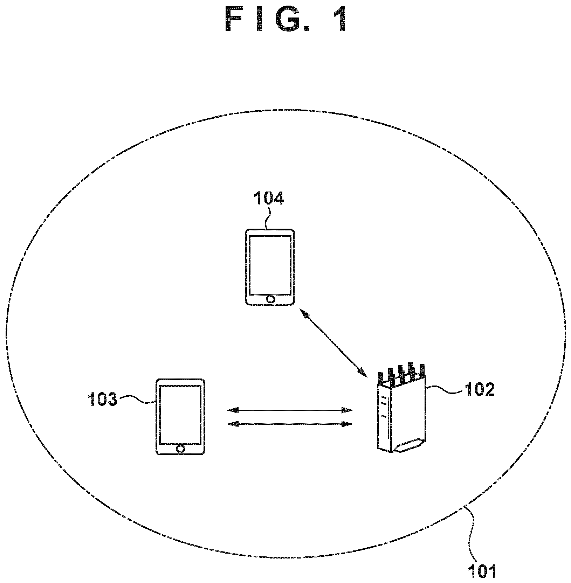

FIG. 1 illustrates an example of the configuration of a network according to the present embodiment. FIG. 1 illustrates a configuration including an access point (AP) 102, an ML-STA 103, and a Non-ML-STA 104 as communication devices supporting IEEE 802.11be. The AP 102 is a communication device that supports a multi-link technique. A network formed by the AP 102 is indicated by the circle 101. Signals transmitted and received by the AP 102 can be transmitted and received by the ML-STA 103 and the Non-ML-STA 104.

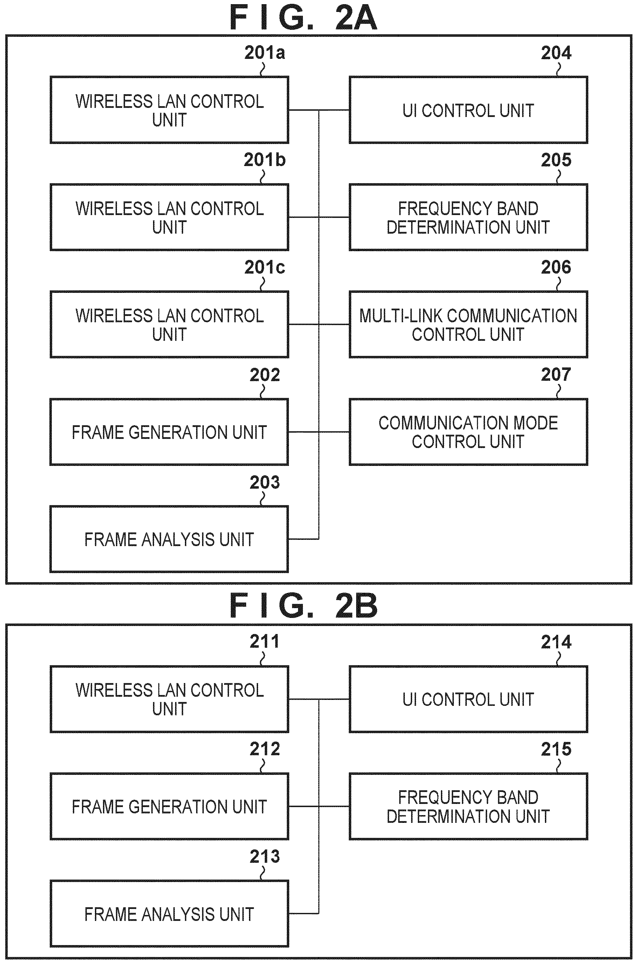

The present embodiment assumes that the AP 102 and the ML-STA 103 include a plurality of wireless LAN control units, and are therefore capable of transmitting and receiving frames at the same time using a plurality of frequency bands, as will be described later with reference to FIGS. 2A and 2B. However, the Non-ML-STA 104 is assumed to include only one wireless LAN control unit, and transmit and receive frames using only one frequency band.

Note that these illustrations are merely examples, and the following descriptions can be applied, for example, to networks containing many ML-STAs and Non-ML-STAs in an even broader area, as well as to a variety of positional relationships among the communication devices.

### Configurations of Communication Devices

The configurations of the communication devices in the present embodiment (the AP 102, the ML-STA 103, and the Non-ML-STA 104) will be described next. The functional configurations of the communication devices will be described first with reference to FIGS. 2A and 2B. FIG. 2A is a block diagram illustrating an example of the functional configuration of the AP 102 and the ML-STA 103. The AP 102 and the ML-STA 103 each includes the following as an example of the functional configuration: wireless LAN control units 201a, 201b, and 201c; a frame generation unit 202; a frame analysis unit 203; a user interface (UI) control unit 204; a frequency band determination unit 205; a multi-link communication control unit 206; and a communication mode control unit 207.

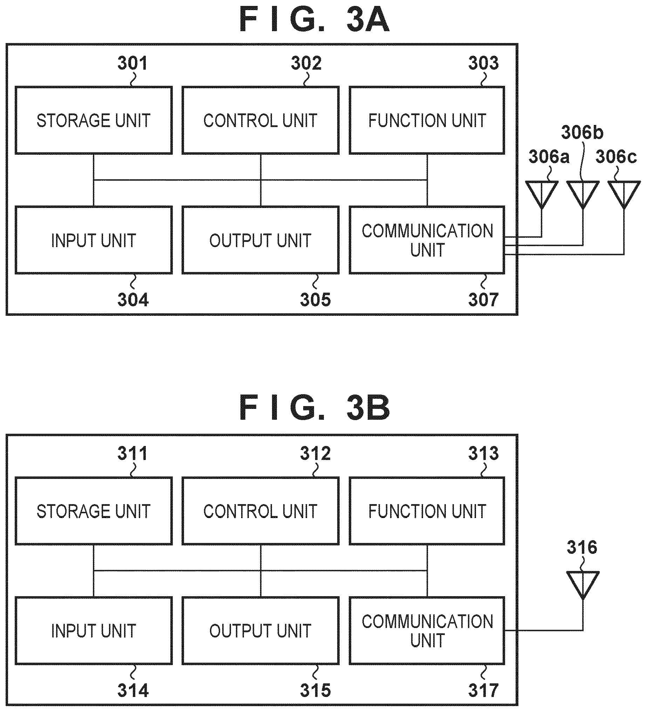

The wireless LAN control units 201a, 201b, and 201c are configured including programs that perform control for transmitting and receiving wireless signals to and from other wireless LAN devices. The wireless LAN control units 201a, 201b, and 201c execute wireless LAN communication control based on frames generated by the frame generation unit 202 in accordance with the IEEE 802.11 standard series. The present embodiment assumes that the wireless LAN control units 201a, 201b, and 201c communicate (perform communication control) in one of the 2.4 GHz band, the 5 GHz band, or the 6 GHz band through antennas 306a, 306b, and 306c (see FIG. 3A), respectively. Note that the number of wireless LAN control units is not limited to three, and may be two, or four or more.

The frame generation unit 202 generates wireless control frames to be transmitted by the wireless LAN control units 201a, 201b, and 201c. The content of the wireless control frames generated by the frame generation unit 202 may be constrained by settings stored in a storage unit 301 (see FIG. 3A). The content of the wireless control frames may be changed according to settings made by a user through an input unit 304 (see FIG. 3A) and the UI control unit 204.

The frame analysis unit 203 interprets frames received by the wireless LAN control units 201a, 201b, and 201c and reflects the content of those frames in the wireless LAN control units 201a, 201b, and 201c. Regardless of which wireless LAN control unit received the frame, passing the frame through the frame analysis unit 203 makes it possible to control even the wireless LAN control units that did not receive the frame.

The UI control unit 204 is configured including a program that controls operations made by a user (not shown) on the input unit 304 (see FIG. 3A) of the AP 102 and the ML-STA 103. The UI control unit 204 also has a function for presenting information to the user through an output unit 305 (see FIG. 3A), in the form of a display of images or the like, audio output, and so on. The frequency band determination unit 205 has a function for determining which frequency band can be used for data communication. The multi-link communication control unit 206 has a function for performing control pertaining to multi-link communication. For example, the multi-link communication control unit 206 performs control for determining (including changing or maintaining) a plurality of frequency bands to be used for communication. The communication mode control unit 207 controls the communication mode (synchronous mode, asynchronous mode, and the like). For example, the communication mode control unit 207 determines whether a predetermined condition pertaining to changing the communication mode is satisfied. The synchronous mode is a communication mode in which an AP and an STA transmit and receive over a plurality of frequency bands in synchronization, whereas the asynchronous mode is a communication mode in which an AP and an STA transmit and receive independently over a plurality of frequency bands.

FIG. 2B is a block diagram illustrating an example of the functional configuration of the Non-ML-STA 104. A wireless LAN control unit 211 is configured including a program that performs control for transmitting and receiving wireless signals to and from other wireless LAN devices. The wireless LAN control unit 211 executes wireless LAN communication control based on frames generated by a frame generation unit 212 in accordance with the IEEE 802.11 standard series. The present embodiment assumes that the wireless LAN control unit 211 communicates (performs communication control) in one of the 2.4 GHz band, the 5 GHz band, or the 6 GHz band through an antenna 316 (see FIG. 3B). The frame generation unit 212 generates wireless control frames to be transmitted by the wireless LAN control unit 211. The content of the wireless control frames generated by the frame generation unit 212 may be constrained by settings stored in a storage unit 311 (see FIG. 3B). The content of the wireless control frames may be changed according to settings made by a user through a UI control unit 214. A frame analysis unit 213 interprets frames received by the wireless LAN control unit 211. The UI control unit 214 is configured including a program that controls operations made by a user (not shown) on an input unit 314 (see FIG. 3B) of the Non-ML-STA 104. The UI control unit 214 also has a function for presenting information to the user through an output unit 315 (see FIG. 3B), in the form of a display of images or the like, audio output, and so on. A frequency band determination unit 215 has a function for determining which frequency band can be used for data communication.

The hardware configurations of the communication devices will be described next with reference to FIGS. 3A and 3B. FIG. 3A is a block diagram illustrating an example of the hardware configuration of the AP 102 and the ML-STA 103. The AP 102 will be described here as an example, but the same descriptions also apply to the ML-STA 103. The AP 102 includes the following as an example of the hardware configuration: the storage unit 301; a control unit 302; a function unit 303; the input unit 304; the output unit 305; a communication unit 307; and the antennas 306a, 306b, and 306c.

The storage unit 301 is constituted by one or both of a ROM and a RAM, and stores various information such as programs for performing various operations (described later), communication parameters for wireless communication, and the like. Note that in addition to memory such as a ROM, a RAM, and the like, storage media such as flexible disks, hard disks, optical disks, magneto-optical disks, CD-ROMs, CD-Rs, magnetic tape, non-volatile memory cards, DVDs, and the like may be used as the storage unit 301.

The control unit 302 is constituted by, for example, a processor such as a CPU or an MPU, an Application Specific Integrated Circuit (ASIC), a Digital Signal Processor (DSP), a Field Programmable Gate Array (FPGA), or the like. Here, "CPU" is an acronym for "Central Processing Unit", and "MPU" is an acronym for "Micro Processing Unit". The control unit 302 controls the AP 102 as a whole by executing programs stored in the storage unit 301. Note that the control unit 302 may control the AP 102 as a whole by operating in cooperation with programs and an Operating System (OS) stored in the storage unit 301.

The control unit 302 also executes predetermined processing such as capturing images, printing, projection, and the like by controlling the function unit 303. The function unit 303 is hardware for the AP 102 to execute the predetermined processing. For example, if the AP 102 is a camera, the function unit 303 is an image capture unit, and performs image capture processing. If, for example, the AP 102 is a printer, the function unit 303 is a printing unit, and performs printing processing. Furthermore, if, for example, the AP 102 is a projector, the function unit 303 is a projection unit, and performs projection processing. The data processed by the function unit 303 may be data stored in the storage unit 301, or may be data communicated with another communication device through the communication unit 307 (described later).

The input unit 304 accepts various operations from the user. The output unit 305 provides various outputs to the user. Here, the "output" by the output unit 305 includes at least one of making a display on a screen, outputting audio through a speaker, outputting vibrations, and the like. Note that both the input unit 304 and the output unit 305 may be implemented as a single module, as in the case of a touch panel. The input unit 304 and the output unit 305 may be integrated parts of the AP 102, or may be separate from the AP 102.

The communication unit 307 controls wireless communication compliant with the IEEE 802.11 standard series, controls IP communication, and the like. In the present embodiment, the communication unit 307 can execute processing compliant with at least the IEEE 802.11be standard. The communication unit 307 also transmits and receives wireless signals for wireless communication by controlling the antennas 306a, 306b, and 306c. The AP 102 communicates content such as image data, document data, video data, and the like with other communication devices through the communication unit 307. The communication unit 307 also includes a transmission queue that holds data to be transmitted.

The antennas 306a, 306b, and 306c are antennas capable of communicating in at least one of the 2.4 GHz band, the 5 GHz band, and the 6 GHz band, respectively. The present embodiment assumes that the antennas 306a, 306b, and 306c are used for communication by the wireless LAN control units 201a, 201b, and 201c (see FIG. 2A), respectively. The antennas 306a, 306b, and 306c may each be physically constituted by at least one antenna for implementing Multi-Input and Multi-Output (MIMO) transmission and reception.

FIG. 3B is a block diagram illustrating an example of the hardware configuration of the Non-ML-STA 104. In FIG. 3B, the storage unit 311, a control unit 312, a function unit 313, the input unit 314, the output unit 315, and a communication unit 317 are similar to the storage unit 301, the control unit 302, the function unit 303, the input unit 304, the output unit 305, and the communication unit 317 illustrated in FIG. 3A, and will therefore not be described. However, the communication unit 317 need not be compliant with the IEEE 802.11be standard. The Non-ML-STA 104 includes the one antenna 316. The antenna 316 is an antenna capable of communicating in at least one of the 2.4 GHz band, the 5 GHz band, and the 6 GHz band. The present embodiment assumes that the antenna 316 is used for communication by the wireless LAN control unit 211 (see FIG. 2B). The antenna 316 may be physically constituted by at least one antenna for implementing MIMO transmission and reception.

### Flow of Processing

The flow of processing by the communication devices in the present embodiment will be described next. Frequency interval values required to ensure that intra-device interference does not occur, which are pre-set in the AP 102 and the ML-STA 103 that support multi-link techniques, will be described first. With multi-link communication in the asynchronous mode (when the same device transmits and receives simultaneously), if there is only a small frequency interval between the respective links used for transmission and reception, the transmitted signal may enter into the reception circuit as radio interference, causing intra-device interference that adversely affects the reception characteristics. To prevent the occurrence of intra-device interference, frequency interval values required to ensure that intra-device interference does not occur are set in the AP 102 and the ML-STA 103.

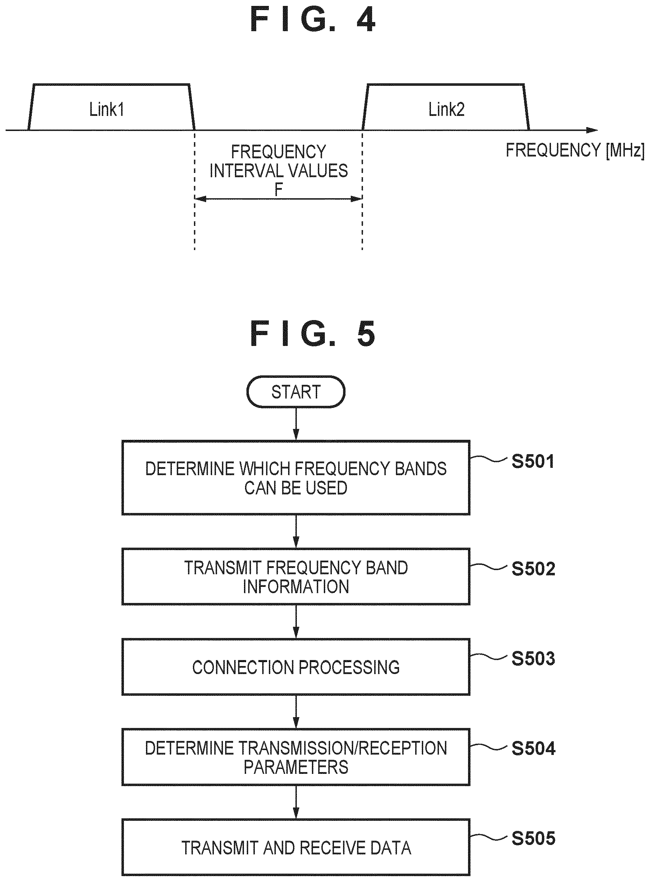

FIG. 4 is a conceptual diagram illustrating a frequency interval value F required to ensure intra-device interference does not occur. As illustrated in FIG. 4, the frequency interval value F is a frequency interval value required to ensure intra-device interference when two links (Link 1 and Link 2) are used. In the present embodiment, the frequency interval value F for the AP 102 ("F_{AP}" hereinafter) is set to 200 MHz, and the frequency interval value F for the ML-STA 103 ("F_{ML-STA}" hereinafter) is set to 300 MHz.

### Connection Processing between AP 102 and ML-STA 103

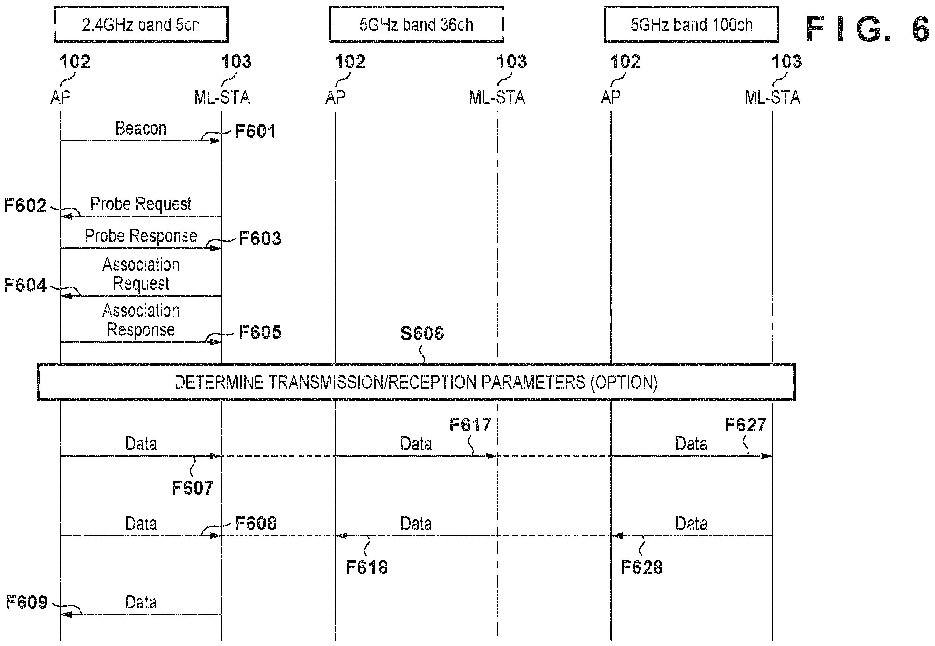

Connection processing between the AP 102 and the ML-STA 103 (processing up to data transmission and reception) will be described with reference to FIGS. 5 and 6. FIG. 5 is a flowchart illustrating processing for connecting with the ML-STA 103, performed by the AP 102 in the present embodiment, and FIG. 6 is a sequence chart illustrating the connection processing executed by the AP 102 and the ML-STA 103 in the present embodiment. As described above, the AP 102 and the ML-STA 103 each includes the wireless LAN control units 201a, 201b, and 201c, each of which are capable of communicating in one of the 2.4 GHz band, the 5 GHz band, and the 6 GHz band.

In the present embodiment, the frequency at which the AP 102 and the ML-STA 103 communicate management frames for the connection processing is assumed to be 2.4 GHz, and connections in other frequency bands are also controlled through such communication. Note that using 2.4 GHz is merely an example, and the frequency at which the management frames are transmitted and received is not limited thereto. Management frames are defined in the IEEE 802.11 series standard and include Beacon frames, Probe Request/Response, Authentication Request/Response, Association Request/Response, Reassociation Request/Response frames, and the like. Processing for generating such frames is performed by the frame generation unit 202.

In FIG. 5, first, the frequency band determination unit 205 of the AP 102 determines which frequency bands can be used (S501). The AP 102 may make this determination based on the degree of congestion in the surrounding wireless environment, but is not limited thereto. The present embodiment assumes that the 2.4 GHz band, the 5 GHz band, and the 6 GHz band can be used.

After the frequency band determination unit 205 of the AP 102 determines the frequency bands that can be used, the AP 102 transmits frequency band information using one of the frequency bands among the frequency bands which can be used (S502). It is assumed here that the wireless LAN control unit 201a transmits using the 2.4 GHz band (in both the AP 102 and the ML-STA 103). The frequency band information includes information on the frequency bands which the AP 102 can use, information indicating that the AP 102 supports multi-link communication, and information on F_{AP} (the same applies in the following descriptions as well). The wireless LAN control unit 201a of the AP 102 adds the frequency band information to a Beacon frame, for example, and transmits that frame in the 2.4 GHz band (F601). Note that the frequency band information may be added to a Probe Response, Authentication Response, Association Response, or Reassociation Response frame transmitted by the AP 102, rather than the Beacon frame.

After the AP 102 transmits the frequency band information to the ML-STA 103, the wireless LAN control unit 201a of the ML-STA 103, which has received the Beacon frame, starts scanning operations by transmitting a Probe Request frame at 2.4 GHz (F602). The wireless LAN control unit 201a of the ML-STA 103 may add frequency band information of the ML-STA 103 to the Probe Request frame. The frequency band information can include information on the frequency bands which the ML-STA 103 can use, information indicating that the ML-STA 103 supports multi-link communication, and information on F_{ML-STA} (the same applies in the following descriptions as well). Note that the ML-STA 103 may notify the AP 102 of its own usable frequency information by including that information in Authentication Request, Association Request, and Reassociation Request frames.

Having received the Probe Request frame from the ML-STA 103, the wireless LAN control unit 201a of the AP 102 transmits a Probe Response frame to the ML-STA 103 (F603). The Probe Response frame can include information on the frequencies which the AP 102 can use. Using the information on the frequencies that can be used, included in the Beacon frame, the Probe Response frame, and the like from the AP 102, the frame analysis unit 203 of the ML-STA 103 detects the frequencies supported by the AP 102 and the channels operating on those frequencies.

Thereafter, the AP 102 and the ML-STA 103 establish a connection by communicating through the respective wireless LAN control units 201a (S503, F604, F605). When a secure connection is to be established using encryption, the AP 102 and the ML-STA 103 may then perform communication processing such as Wi-Fi Protected Access (WPA), WPA2, WPA3, or the like. Although the present embodiment describes an unencrypted connection, the connection is not limited thereto. The AP 102 and the ML-STA 103 may establish connections in at least two frequency bands that can be used. For example, when there are three frequency bands which can be used, connections may be established using two or all of the frequency bands. Thereafter, the channel (frequency band) over which data can be transmitted and received in this manner becomes a "link". The present embodiment assumes that channel 5 in the 2.4 GHz band and channels 36 and 100 in the 5 GHz band are links. It is also assumed that the AP 102 and the ML-STA 103 have functions enabling communication at a maximum bandwidth of 40 MHz in the 2.4 GHz band and 160 MHz in the 5 GHz band and the 6 GHz band.

Once a connection is established between the AP 102 and the ML-STA 103, the multi-link communication control unit 206 of the AP 102 optionally determines transmission and reception parameters (S504, F606). The transmission and reception parameters are information (parameters) for determining how transmitted/received data is to be distributed for each connection when a plurality of connections are established. Data distribution amounts can be determined, for example, according to the maximum throughput that can be used in each frequency band, or according to the current throughput calculated by actually sending test packets. These values may be changed at any time. For example, after transmitting and receiving data for a set period, the AP 102 may determine the data distribution amount for the next set period from the amount of data that was actually able to be transmitted and received. Alternatively, the bandwidth for transmission and reception may be divided between control packets and data packets.

Additionally, when performing multi-link communication, the communication mode control unit 207 of the AP 102 determines the communication mode for each link, i.e., whether to transmit and receive simultaneously among the links. If the frequency interval between two of the links used is less than either F_{AP} (= 200 MHz) or F_{ML-STA} (= 300 MHz), the communication mode control unit 207 determines not to transmit and receive simultaneously (that is, not use the asynchronous mode) using those two links. In other words, when the frequency interval between two links is less than the frequency interval required for both the AP 102 and the ML-STA 103 to transmit and receive simultaneously over those two links, the communication mode control unit 207 can determine to communicate in the synchronous mode. When the frequency interval between two links is greater than or equal to the stated frequency interval, the communication mode control unit 207 can determine to communicate in the synchronous mode and/or the asynchronous mode. The wireless LAN control unit 201a of the AP 102 notifies the ML-STA 103 of that determination as the (included in the) transmission and reception parameters.

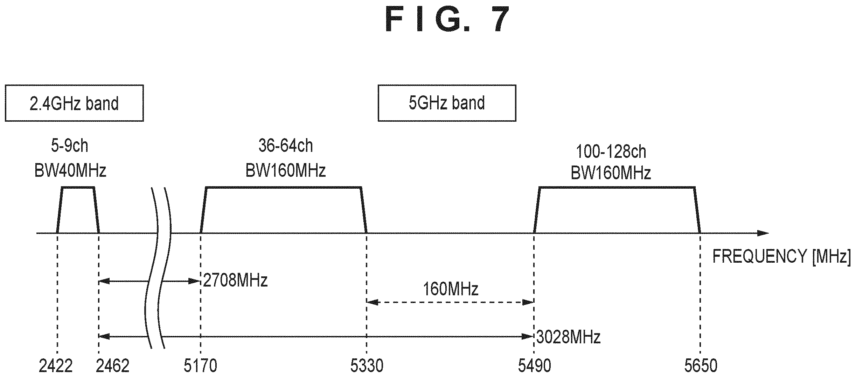

Taking into account the maximum bandwidth that can be used for communication, the frequency intervals between the links used in multi-link communication are as follows in the present embodiment. FIG. 7 illustrates the frequency intervals of links used in multi-link communication in the present embodiment.
- Frequency interval between channels 5 and 36: 2708 MHz
- Frequency interval between channels 36 and 100: 160 MHz
- Frequency interval between channels 5 and 100: 3028 MHz
Comparing these interval values with F_{AP} (= 200 MHz) and F_{ML-STA} (= 300 MHz), the frequency interval between channels 36 and 100 is smaller than both F_{AP} and F_{ML-STA}. Accordingly, the communication mode control unit 207 of the AP 102 determines to communicate in the synchronous mode between the links for channels 36 and 100 rather than transmitting and receiving simultaneously (using the asynchronous mode). On the other hand, the frequency intervals between the links of channels 5 and 36 and channels 5 and 100 are greater than both F_{AP} and F_{ML-STA}. Accordingly, the communication mode control unit 207 of the AP 102 determines that transmission and reception may be performed at the same time between these links (i.e., either the synchronous mode or the asynchronous mode may be used). The wireless LAN control unit 201a of the AP 102 notifies the ML-STA 103 of that determination as the (included in the) transmission and reception parameters.

Using those transmission and reception parameters, the AP 102 and the ML-STA 103 start transmitting and receiving data using multi-link communication (S505, F607 to F609, F617 to F6F618, and F627 to F628). In the example in FIG. 6, the wireless LAN control units 201a of the AP 102 and the ML-STA 103 perform multi-link communication on channel 5 (the 2.4 GHz band) using the asynchronous mode. Additionally, the wireless LAN control units 201b of the AP 102 and the ML-STA 103 perform multi-link communication on channel 36 (the 5 GHz band) using the synchronous mode. Additionally, the wireless LAN control unit 201c of the AP 102 and the ML-STA 103 perform multi-link communication on channel 100 (the 5 GHz band) using the synchronous mode. Note that multi-link communication using the synchronous mode can be implemented as synchronous communication by, for example, the AP 102 transmitting a trigger frame regarding the communication timing to the ML-STA 103.

### Connection Processing between AP 102 and Non-ML-STA 104, Processing for Changing Frequency Band Used

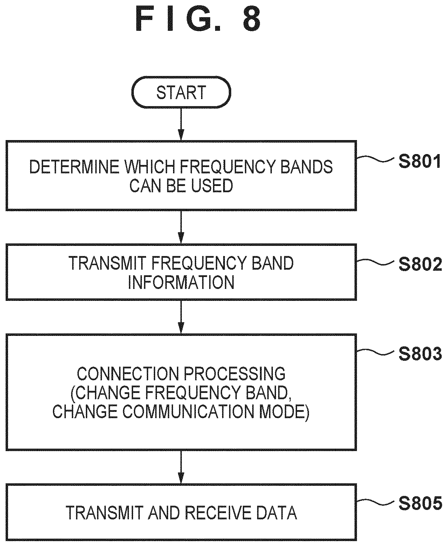

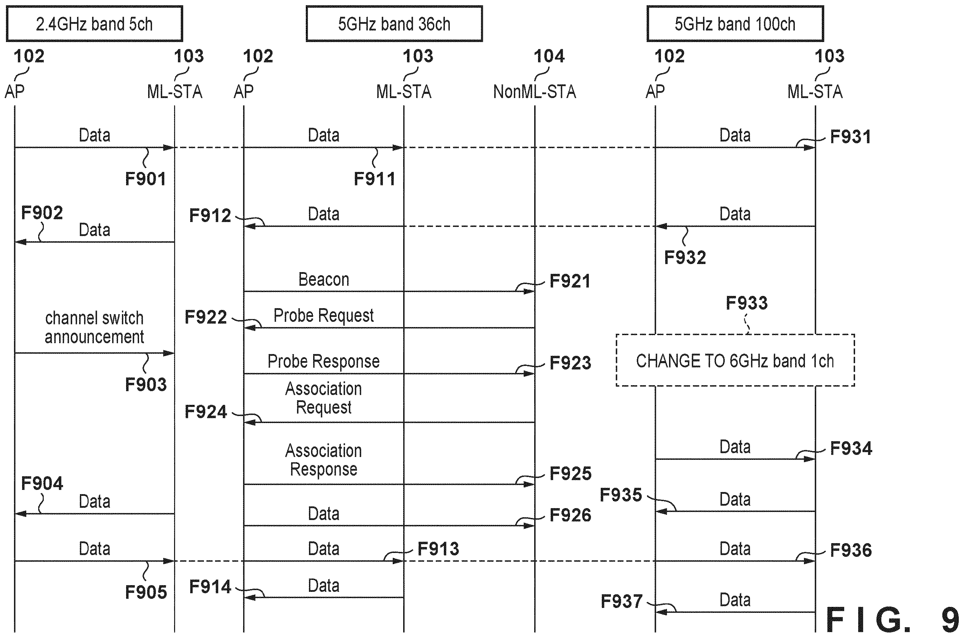

Connection processing performed between the AP 102 and the Non-ML-STA 104 when the AP 102 establishes multi-link communication with the ML-STA 103, and processing performed by the AP 102 for changing the frequency band used in consideration of intra-device interference, will be described next with reference to FIGS. 8 and 9. FIG. 8 is a flowchart illustrating processing for connecting with the Non-ML-STA 104, performed by the AP 102 in the present embodiment, and FIG. 9 is a sequence chart illustrating the connection processing executed by the AP 102 and the Non-ML-STA 104 in the present embodiment. As described above, the Non-ML-STA 104 includes the wireless LAN control unit 211, which is capable of communicating in one of the 2.4 GHz band, the 5 GHz band, and the 6 GHz band.

In FIG. 9, the AP 102 and the ML-STA 103 are assumed to be transmitting and receiving data (F901, F902, F911, F912, F931, and F932) following the data transmission and reception illustrated in FIGS. 5 and 6 (S505, F607 to F609, F617 to F6F618, and F627 to F628). At this time, the frequency band determination unit 205 of the AP 102 periodically determines which frequency bands can be used (S801). The AP 102 may make this determination based on the degree of congestion in the surrounding wireless environment, but is not limited thereto. The present embodiment assumes that the 2.4 GHz band, the 5 GHz band, and the 6 GHz band can be used.

In S802, the AP 102 periodically transmits a Beacon frame using one of the frequency bands among the usable frequency bands (F921). It is assumed here that the wireless LAN control unit 201b transmits a management frame containing a Beacon frame to the Non-ML-STA 104 using the 5 GHz band. The wireless LAN control unit 201b adds the frequency band information of the AP 102 to the Beacon frame. The frequency band information is as described above, and can include information indicating that the AP 102 supports multi-link communication.

Upon receiving the Beacon frame, the wireless LAN control unit 211 of the Non-ML-STA 104 starts scanning operations by transmitting a Probe Request frame over the one frequency band which can be used (5 GHz, here) (F922). The wireless LAN control unit 211 of the Non-ML-STA 104 may add frequency band information of the Non-ML-STA 104 to the Probe Request frame. The frequency band information can include information on the frequency bands which the Non-ML-STA 104 can use and information indicating that the Non-ML-STA 104 does not support multi-link communication. Alternatively, the frequency band information may be configured not to include information indicating that the Non-ML-STA 104 supports multi-link communication. Note that the Non-ML-STA 104 may notify the AP 102 of its own frequency information by including that information in Authentication Request, Association Request, and Reassociation Request frames.

The frame analysis unit 203 of the AP 102 analyzes the usable frequency band information of the Non-ML-STA 104 added to the Probe Request frame from the Non-ML-STA 104. The frame analysis unit 203 detects that the Non-ML-STA 104 does not support multi-link communication from the fact that information indicating multi-link communication is not supported is included (or from the fact that information indicating multi-link communication is supported is not included).

When the AP 102 is performing multi-link communication with an STA aside from the Non-ML-STA 104 (i.e., the ML-STA 103) in the synchronous mode, as in this example, if the Non-ML-STA 104 connects to a link being used in that synchronous mode (channel 36), the communication throughput of the ML-STA 103 will drop. Accordingly, when the Non-ML-STA 104 is performing processing for connecting with a link, such as channel 36, for which the frequency interval with at least one adjacent link is smaller than F_{AP} (= 300 MHz) and F_{ML-STA} (= 200 MHz), the communication mode control unit 207 of the AP 102 determines that a condition pertaining to changing the communication mode is satisfied. The multi-link communication control unit 206 then determines to change a plurality of links used such that the frequency intervals between the links become greater than both F_{AP} and F_{ML-STA}, and performs change processing. In this example, the 160 MHz interval between the two links, namely channels 36 and 100, is smaller than F_{AP} (= 300 MHz) and F_{ML-STA} (= 200 MHz), as described above. The AP 102 therefore changes channel 100. In this example, AP 102 changes to channel 1 of the 6 GHz band (center frequency of 5945 MHz), where bandwidth of 160 MHz can be secured.

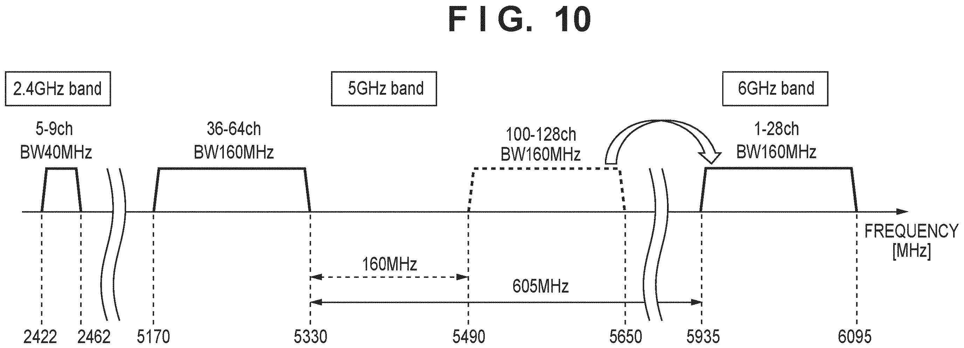

FIG. 10 is a conceptual diagram illustrating a frequency band change for a link in the present embodiment. As illustrated in FIG. 10, changing the frequency band of the link produces a frequency interval of 605 MHz, which is greater than F_{AP} and F_{ML-STA}. Accordingly, the AP 102 and the ML-STA 103 can transmit and receive simultaneously between the links of channel 36 in the 5 GHz band and channel 1 in the 6 GHz band, without intra-device interference.

The wireless LAN control unit 201a of the AP 102 transmits a channel switch announcement to notify the ML-STA 103 that the frequency band of the link is being changed and the post-change frequency band (F903). The multi-link communication control units 206 of the AP 102 and the ML-STA 103 then perform control for changing the link (F933). Furthermore, the communication mode control unit 207 of the AP 102 determines that transmission and reception may be executed simultaneously over any link in the multi-link communication with the ML-STA 103. In other words, the communication mode control unit 207 of the AP 102 determines that the communication may use either the synchronous mode or the asynchronous mode. The ML-STA 103 is notified of that determination by the wireless LAN control unit 201a of the AP 102.

The wireless LAN control unit 201b of the AP 102 transmits a Probe Response frame (F923) as a response to the Probe Request frame from the Non-ML-STA 104 (F922). The Probe Response frame includes information on the frequency bands which can be used after the link is changed. Based on the information on the frequency bands that can be used after the link is changed, included in the Probe Response frame from the AP 102, the frame analysis unit 213 of the Non-ML-STA 104 detects the frequencies supported by the AP 102 and the channels operating on those frequencies.

Then, the AP 102 and the Non-ML-STA 104 establish a connection by communicating through the wireless LAN control unit 201b and the wireless LAN control unit 211 (S803, F924, F925). When a secure connection is to be established using encryption, the AP 102 and the Non-ML-STA 104 may then perform communication processing such as WPA, WPA2, WPA3, or the like. Although the present embodiment describes an unencrypted connection, the connection is not limited thereto.

Then, the AP 102 and the ML-STA 103 transmit and receive data using multi-link communication (F904, F905, F913, F914, F934 to F937). The AP 102 and the Non-ML-STA 104 transmit and receive data using single-link communication in a single frequency band (F926).

### Processing for Changing Frequency Band Used after Disconnecting STA Not Supporting Multi-Link

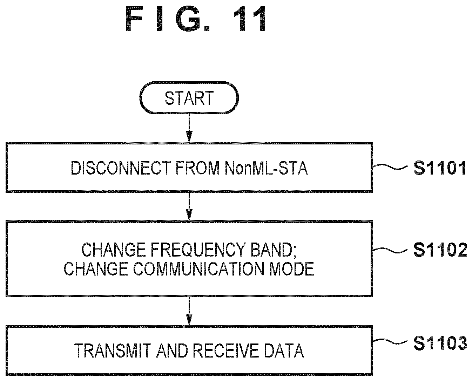

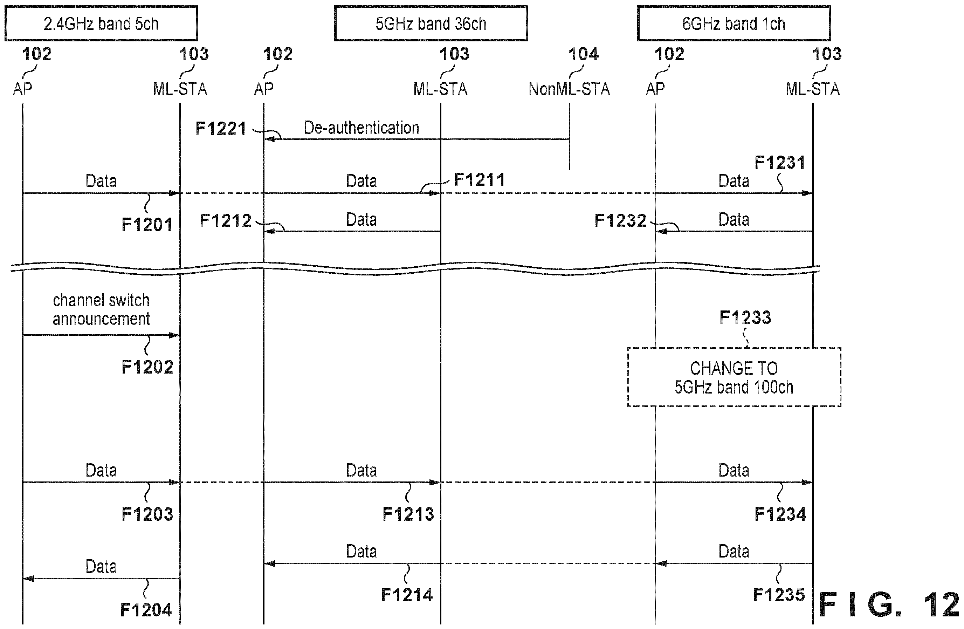

Processing for returning the frequency band used for the multi-link communication between the AP 102 and the ML-STA 103 to its original band (from before the change) after the Non-ML-STA 104 disconnects from the AP 102 will be described next with reference to FIGS. 11 and 12. The AP 102 can continue to communicate with the ML-STA 103 without changing the frequency band of the link, even after the Non-ML-STA 104 disconnects from the AP 102. On the other hand, the AP 102 can also change back to the original frequency band and change to synchronous mode in response to the communication conditions in the frequency band being congested or the like.

FIG. 11 is a flowchart illustrating frequency band change processing for a link after disconnection from the Non-ML-STA 104, executed by the AP 102, in the present embodiment. FIG. 12 is a sequence chart illustrating frequency band change processing for a link after disconnection from a Non-ML-STA, in the present embodiment.

In FIG. 12, the AP 102, the ML-STA 103, and the Non-ML-STA 104 are assumed to be transmitting and receiving data following the data transmission and reception illustrated in FIGS. 9 and 10 (F904, F905, F913, F914, F934 to F937, and F926). It is further assumed here that the Non-ML-STA 104 has stopped transmitting and receiving data or the like and disconnects from the AP 102. At this time, the wireless LAN control unit 211 of the Non-ML-STA 104 transmits a De-authentication frame to the AP 102 (F1221). Through this, the AP 102 disconnects from the Non-ML-STA 104 (S1101).

Thereafter, the transmission and reception of data between the AP 102 and the ML-STA 103 continues (F1201, F1211, F1212, F1231, and F1232), while if necessary (e.g., due to the degree of congestion (communication conditions) of the surrounding wireless environment, an input operation made by the user, or the like), the AP 102 can return the frequency band to the original band and change to the synchronous mode. This example assumes that if the Non-ML-STA 104 has disconnected from the AP 102, the communication mode control unit 207 of the AP 102 determines that a condition pertaining to changing the communication mode is satisfied according to the communication conditions. Thereafter, the multi-link communication control unit 206 of the AP 102 determines to return to the frequency band changed in F933, and the communication mode control unit 207 determines to change to the synchronous mode. The wireless LAN control unit 201a then transmits a channel switch announcement to the ML-STA 103 (F1202, S1102). As a result, the AP 102 notifies the ML-STA of the change in the frequency band of the link and the post-change frequency band. The multi-link communication control units 206 of the AP 102 and the ML-STA 103 then change the link (F1233). In this example, the AP 102 returns the link of channel 1 in the 6 GHz band to channel 100 in the 5 GHz band. The AP 102 then transmits and receives data to and from the ML-STA 103 through multi-link communication (S1103, F1203, F1204, F1213, F1214, F1234, and F1235).

Note that the configuration may be such that after the AP 102 disconnects from the Non-ML-STA 104, the multi-link communication control unit 206 changes the frequency band used regardless of the determination by the communication mode control unit 207, and the communication mode control unit 207 then determines the communication mode.

In this manner, in the present embodiment, if, when an AP and an STA that support multi-link communication are performing multi-link communication in the synchronous mode, an STA that does not support multi-link connects to the AP, the link is changed to a frequency band over which transmission and reception can be executed simultaneously. This makes it possible to suppress a drop in communication throughput in the STA that supports multi-link communication. Additionally, a procedure was also described in which when the STA that does not support multi-link disconnects from an AP after having been connected to that AP, the AP returns to the original frequency band and communicates in the synchronous mode.

### Second Embodiment

The present embodiment is an embodiment concerning processing performed when, in a state where an AP and an ML-STA are performing multi-link communication, a Non-ML-STA communicates with the AP. The configuration of the wireless communication system, and the configurations of the AP 102, the ML-STA 103, and the Non-ML-STA 104, are similar to those of the first embodiment, and will therefore not be described here. The frequency interval values F required to ensure intra-device interference does not occur is also similar to that in the first embodiment. In other words, the frequency interval values F required to ensure that intra-device interference does not occur in the AP 102 and the ML-STA 103 are F_{AP} = 200 MHz and F_{ML-STA} = 300 MHz, respectively.

### Connection Processing between AP 102 and ML-STA 103

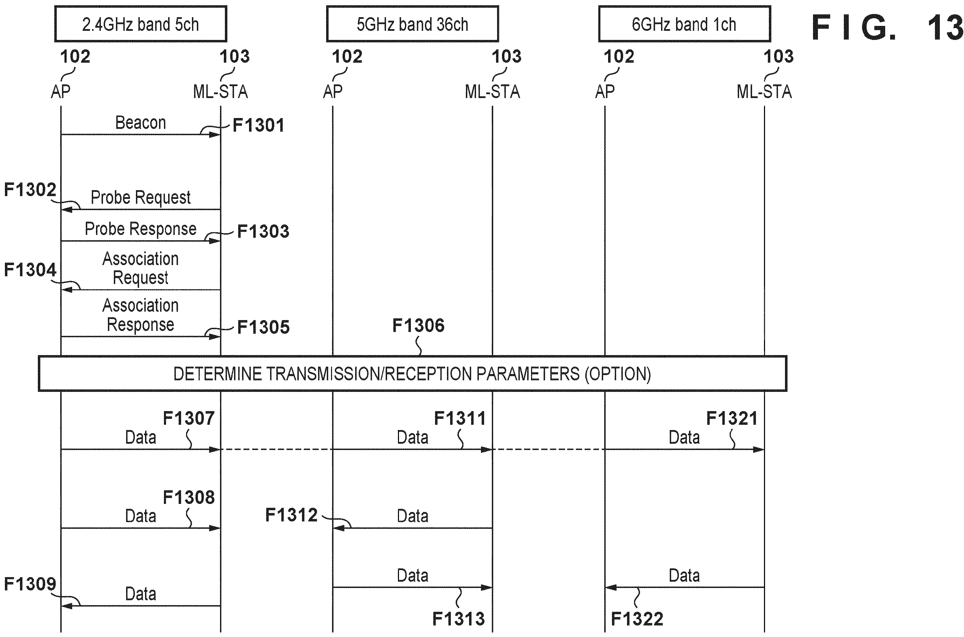

Connection processing between the AP 102 and the ML-STA 103 (processing up to data transmission and reception) will be described with reference to FIGS. 5 and 13. FIG. 5 is a flowchart illustrating processing for connecting with the ML-STA 103 executed by the AP 102 in the present embodiment, and is the same as in the first embodiment. FIG. 13 is a sequence chart illustrating connection processing executed between the AP 102 and the ML-STA 103 in the present embodiment. As described above, the AP 102 and the ML-STA 103 each includes the wireless LAN control units 201a, 201b, and 201c, each of which are capable of communicating in one of the 2.4 GHz band, the 5 GHz band, and the 6 GHz band.

In the present embodiment, the frequency at which the AP 102 and the ML-STA 103 communicate management frames for the connection processing is assumed to be 2.4 GHz, and connections in other frequency bands are also controlled through such communication. Note that using 2.4 GHz is merely an example, and the frequency at which the management frames are transmitted and received is not limited thereto. The management frame is as described in the first embodiment.

The processing from F1301 to F1305 in FIG. 13 is similar to that in the first embodiment (corresponding to S501 to S503 in FIG. 5 and F601 to F605 in FIG. 6), and will therefore not be described. Note that the present embodiment assumes that channel 5 in the 2.4 GHz band, channel 36 in 5 GHz band, and channel 1 in the 6 GHz band are links. It is also assumed that the AP 102 and the ML-STA 103 have functions enabling communication at a maximum bandwidth of 40 MHz in the 2.4 GHz band and 160 MHz in the 5 GHz band and the 6 GHz band.

Once a connection is established between the AP 102 and the ML-STA 103, the multi-link communication control unit 206 of the AP 102 optionally determines transmission and reception parameters (S504, F1306). The transmission and reception parameters are information (parameters) for determining how transmitted/received data is to be distributed for each connection when a plurality of connections are established, and are as described in the first embodiment.

Additionally, when performing multi-link communication, the communication mode control unit 207 of the AP 102 determines the communication mode for each link, i.e., whether to transmit and receive simultaneously among the links. Similar to the first embodiment, if the frequency interval between two of the links used is less than either F_{AP} (= 200 MHz) or F_{ML-STA} (= 300 MHz), the communication mode control unit 207 determines not to transmit and receive simultaneously (that is, not use the asynchronous mode) using those two links. The wireless LAN control unit 201a of the AP 102 notifies the ML-STA 103 of that determination as the (included in the) transmission and reception parameters.

Taking into account the maximum bandwidth that can be used for communication, the frequency intervals between the links used in multi-link communication are as follows in the present embodiment.
- Frequency interval between channels 5 and 36: 2708 MHz
- Frequency interval between channel 36 and channel 1 in the 6 GHz band: 605 MHz
- Frequency interval between channel 5 and channel 1 in the 6 GHz band: 3473 MHz
Comparing these interval values with F_{AP} (= 200 MHz) and F_{ML-STA} (= 300 MHz), both frequency intervals are smaller than both F_{AP} and F_{ML-STA}. Accordingly, the communication mode control unit 207 of the AP 102 determines that transmission and reception may be performed at the same time between the links (i.e., either the synchronous mode or the asynchronous mode may be used). The wireless LAN control unit 201a of the AP 102 notifies the ML-STA 103 of that determination as the (included in the) transmission and reception parameters.

Using those transmission and reception parameters, the AP 102 and the ML-STA 103 start transmitting and receiving data using multi-link communication (S505, F1307 to 1309, F1311 to F1313, and F1321 to F1322). In the example in FIG. 13, the wireless LAN control units 201a of the AP 102 and the ML-STA 103 perform multi-link communication on channel 5 (the 2.4 GHz band) using the asynchronous mode. Additionally, the wireless LAN control units 201b of the AP 102 and the ML-STA 103 perform multi-link communication on channel 36 (the 5 GHz band) using the asynchronous mode. Additionally, the wireless LAN control units 201c of the AP 102 and the ML-STA 103 perform multi-link communication on channel 1 (the 6 GHz band) using the asynchronous mode.

### Connection Processing between AP 102 and Non-ML-STA 104

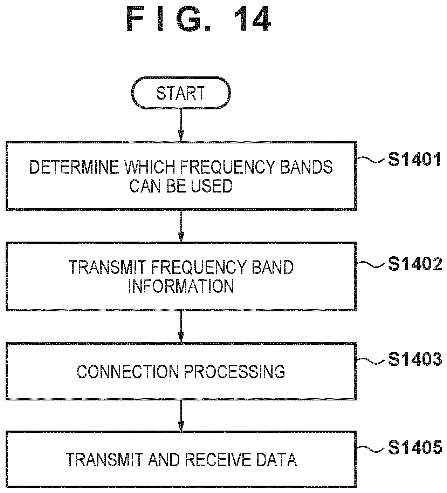

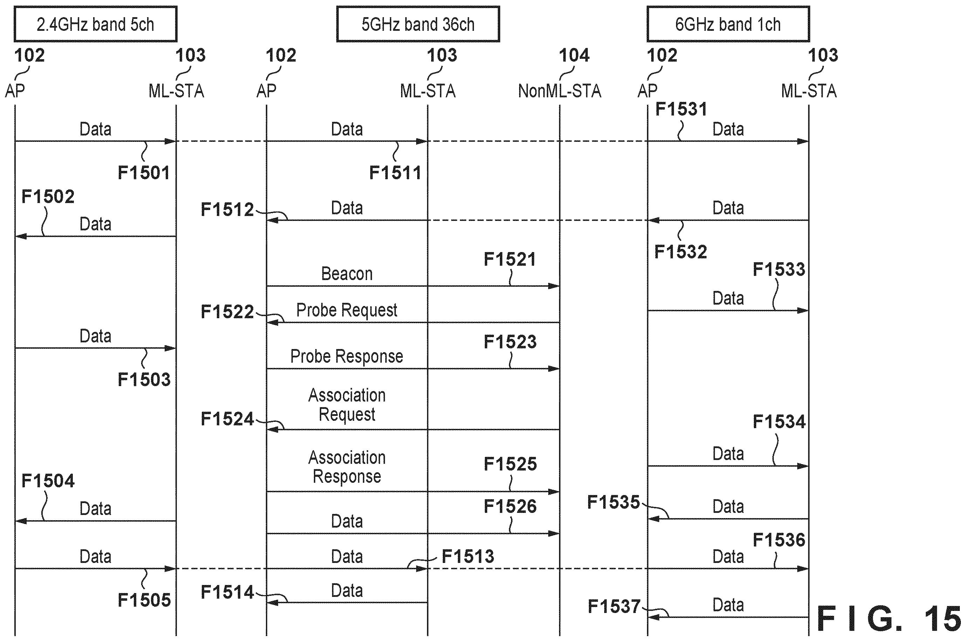

Connection processing performed between the AP 102 and the Non-ML-STA 104 after the AP 102 establishes multi-link communication with the ML-STA 103 will be described next with reference to FIGS. 14 and 15. FIG. 14 is a flowchart illustrating processing for connecting with the Non-ML-STA 104, performed by the AP 102 in the present embodiment, and FIG. 15 is a sequence chart illustrating the connection processing executed by the AP 102 and the Non-ML-STA 104 in the present embodiment. As described above, the Non-ML-STA 104 includes the wireless LAN control unit 211, which is capable of communicating in one of the 2.4 GHz band, the 5 GHz band, and the 6 GHz band.

In FIG. 15, the AP 102 and the ML-STA 103 are assumed to be transmitting and receiving data (F1501, F1502, F1511, F1512, F1531, and F1532) following the data transmission and reception illustrated in FIGS. 5 and 13 (S505, F1307 to 1309, F1311 to F1313, and F1321 toF1322). At this time, the frequency band determination unit 205 of the AP 102 periodically determines which frequency bands can be used (S1401). The AP 102 may make this determination based on the degree of congestion in the surrounding wireless environment, but is not limited thereto. The present embodiment assumes that the 2.4 GHz band, the 5 GHz band, and the 6 GHz band can be used.

In S1402, the AP 102 periodically transmits a Beacon using one of the frequency bands among the usable frequency bands (F1521). It is assumed here that the wireless LAN control unit 201b transmits a management frame containing a Beacon frame to the Non-ML-STA 104 using the 5 GHz band. The wireless LAN control unit 201b adds the frequency band information of the AP 102 to the Beacon frame. The frequency band information is as described above, and the frequency band information can include information indicating that the AP 102 supports multi-link communication.

Upon receiving the Beacon frame, the wireless LAN control unit 211 of the Non-ML-STA 104 starts scanning operations by transmitting a Probe Request frame over the one frequency band which can be used (5 GHz, here) (F1522). The wireless LAN control unit 211 of the Non-ML-STA 104 may add frequency band information of the Non-ML-STA 104 to the Probe Request frame. The frequency band information can include information on the frequency bands which the Non-ML-STA 104 can use and information indicating that the Non-ML-STA 104 does not support multi-link communication. Alternatively, the frequency band information may be configured not to include information indicating that the Non-ML-STA 104 supports multi-link communication. Note that the Non-ML-STA 104 may notify the AP 102 of its own frequency information by including that information in Authentication Request, Association Request, and Reassociation Request frames.

The frame analysis unit 203 of the AP 102 analyzes the usable frequency band information of the Non-ML-STA 104 added to the Probe Request frame from the Non-ML-STA 104. The frame analysis unit 203 detects that the Non-ML-STA 104 does not support multi-link communication from the fact that information indicating multi-link communication is not supported is included (or from the fact that information indicating multi-link communication is supported is not included).

In this example, the frequency intervals between the links are greater than both F_{AP} and F_{ML-STA}, and thus the communication mode control unit 207 of the AP 102 determines that the condition pertaining to changing the communication mode is not satisfied. Accordingly, the multi-link communication control unit 206 does not change the frequency band of the link as in the first embodiment. In response to the Probe Request frame from the Non-ML-STA 104 (F1522), the wireless LAN control unit 201b of the AP 102 transmits a Probe Response frame including information on the usable frequency bands (F1523). Based on the information on the frequency bands that can be used, included in the Probe Response frame from the AP 102, the frame analysis unit 213 of the Non-ML-STA 104 detects the frequencies supported by the AP 102 and the channels operating on those frequencies.

Then, the AP 102 and the Non-ML-STA 104 establish a connection by communicating through the wireless LAN control unit 201b and the wireless LAN control unit 211 (S1403, F1524, F1525). When a secure connection is to be established using encryption, the AP 102 and the Non-ML-STA 104 may then perform communication processing such as WPA, WPA2, WPA3, or the like. Although the present embodiment describes an unencrypted connection, the connection is not limited thereto.

Thereafter, the AP 102 and the ML-STA 103 continue to perform multi-link communication (in the asynchronous mode), in which transmission and reception can be performed simultaneously (F1503 to F1505, F1513 to F1514, and F1533 to F1537). The AP 102 and the Non-ML-STA 104 transmit and receive data using single-link communication in a single frequency band (F1526).

### Changing Frequency Band Used after Disconnecting STA Not Supporting Multi-Link

Processing for returning the frequency band used for the multi-link communication between the AP 102 and the ML-STA 103 to its original band after the Non-ML-STA 104 disconnects from the AP 102 is similar to that in the first embodiment (described with reference to FIGS. 11 and 12). In other words, if the Non-ML-STA 104 has disconnected from the AP 102, the communication mode control unit 207 of the AP 102 determines that a condition pertaining to changing the communication mode is satisfied according to the communication conditions. The AP 102 then transmits a channel switch announcement to the ML-STA 103 as described with reference to FIG. 12 (F1202). As a result, the AP 102 notifies the ML-STA of the change in the frequency band of the link and the post-change frequency band. The multi-link communication control units 206 of the AP 102 and the ML-STA 103 then change the link (F1233).

In this manner, in the present embodiment, if, when an AP and an STA that support multi-link are performing multi-link communication in a mode in which transmission and reception can be executed simultaneously, an STA that does not support multi-link connects to the AP, the connection can be made appropriately. Through this, the AP and the STA that supports multi-link can continue communication without causing a drop in communication throughput.

### Third Embodiment

The present embodiment is an embodiment concerning processing for changing to a mode in which transmission and reception can be executed simultaneously (the asynchronous mode), if, when an AP and an ML-STA are performing multi-link communication in synchronous mode, an application where data is transmitted and received bidirectionally in real time is used. The configuration of the wireless communication system, and the configurations of the AP 102, the ML-STA 103, and the Non-ML-STA 104, are similar to those of the first embodiment, and will therefore not be described here. In the present embodiment, the communication mode of multi-link communication is changed to the asynchronous mode based on an access category as defined in IEEE 802.11e. The access category (AC) indicates a priority of frame (packet) transmission.

### Changing Frequency Band Used Based on Type of Transmitted Data

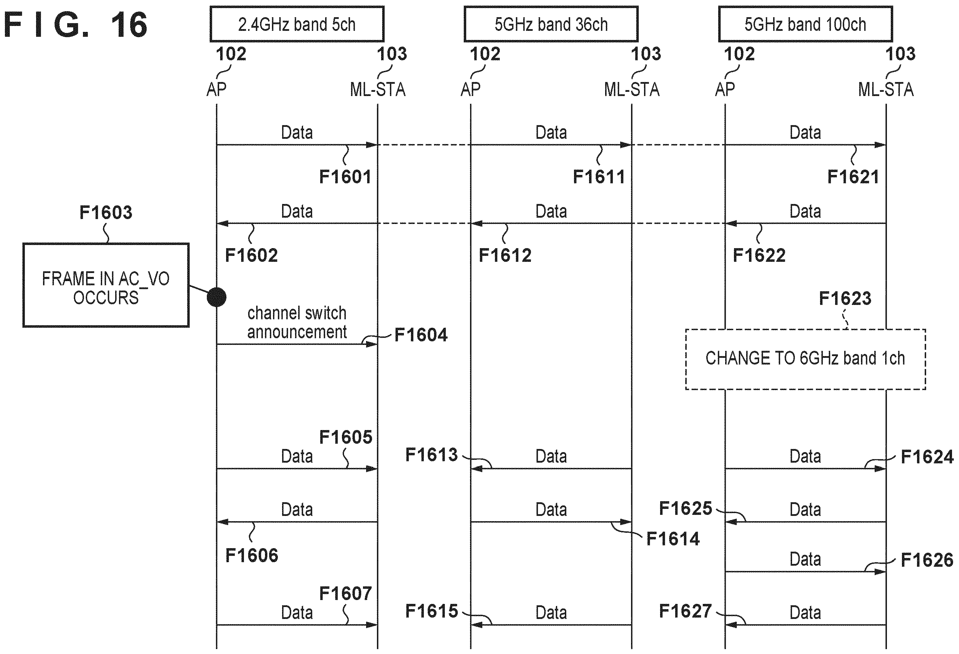

Processing for changing to the asynchronous mode according to the type of transmitted data after the AP 102 and the ML-STA 103 establish multi-link communication will be described with reference to FIG. 16. FIG. 16 is a sequence chart illustrating processing for re-changing a frequency band used based on a type of transmitted data in the present embodiment. The present embodiment assumes that the type of the transmitted data is distinguished by the access category defined in IEEE 802.11e. It is also assumed that "AC_VO" (a voice data access category) is set in the multi-link communication control unit 206 of the AP 102 as an access category serving as a condition for changing to the asynchronous mode. AC_VO is the access category having the highest transmission priority.

In FIG. 16, the AP 102 and the ML-STA 103 are communicating in the synchronous mode through, for example, the procedure described in the first embodiment, using channel 5 in the 2.4 GHz band, channel 36 in the 5 GHz band, and channel 100 in the 5 GHz band as links (F1601, F1602, F1611, F1622, F1621, and F1622). It is assumed here that the AP 102 and the ML-STA 103 are executing applications that transmit and receive data bidirectionally in real time.

Assume that in F1603, data addressed to the ML-STA 103, generated by the application that transmits and receives data bidirectionally in real time, has entered the transmission queue within the communication unit 307 of the AP 102 as a frame in the AC_VO category. Based on the access category of the data addressed to the ML-STA 103 (the transmitted data), the multi-link communication control unit 206 of the AP 102 detects that the transmitted data is data of a specific type that satisfies a condition pertaining to changing the communication mode. In this case, the communication mode control unit 207 determines that the condition pertaining to changing the communication mode is satisfied. The multi-link communication control unit 206 then determines to change the link from the synchronous mode to a frequency band that transmits and receives simultaneously (that is, in which the asynchronous mode is possible), and then performs the change processing. Specifically, the multi-link communication control unit 206 changes the link such that the frequency intervals between the links become greater than both F_{AP} and F_{ML-STA}. In this example, the 160 MHz interval between the two links, namely channels 36 and 100, is smaller than F_{AP} (= 300 MHz) and F_{ML-STA} (= 200 MHz). The AP 102 therefore changes channel 100. Specifically, as described in the first embodiment with reference to FIG. 10, the AP 102 changes to channel 1 in the 6 GHz band (center frequency of 5945 MHz), where a bandwidth of 160 MHz can be secured. As a result, the frequency interval becomes 605 MHz, which is greater than both F_{AP} and F_{ML-STA}, and thus the AP 102 and the ML-STA 103 can transmit and receive simultaneously between the links of channel 36 in the 5 GHz band and channel 1 in the 6 GHz band, without intra-device interference.

The wireless LAN control unit 201a of the AP 102 transmits a channel switch announcement to notify the ML-STA 103 that the frequency band of the link is being changed and the post-change frequency band (F1604). The multi-link communication control units 206 of the AP 102 and the ML-STA 103 then perform control for changing the link (F1623). Furthermore, the multi-link communication control unit 206 of the AP 102 determines that transmission and reception may be executed simultaneously over any link in the multi-link communication with the ML-STA 103. In other words, the multi-link communication control unit 206 of the AP 102 determines that the communication may use either the synchronous mode or the asynchronous mode. The ML-STA 103 is notified of that determination by the wireless LAN control unit 201a of the AP 102. Thereafter, the AP 102 and the ML-STA 103 transmit and receive data through multi-link communication (F1605 to F1607, F1613 to F1615, and F1624 to F1627).

Although the present embodiment describes changing from the synchronous mode to the asynchronous mode under the condition that a frame in the AC_VO category enters the transmission queue, another access category may be used instead. Furthermore, a different parameter indicating the transmission priority of data may be used rather than an access category.

### Processing for Re-Changing Frequency Band Used Based on Type of Transmitted Data

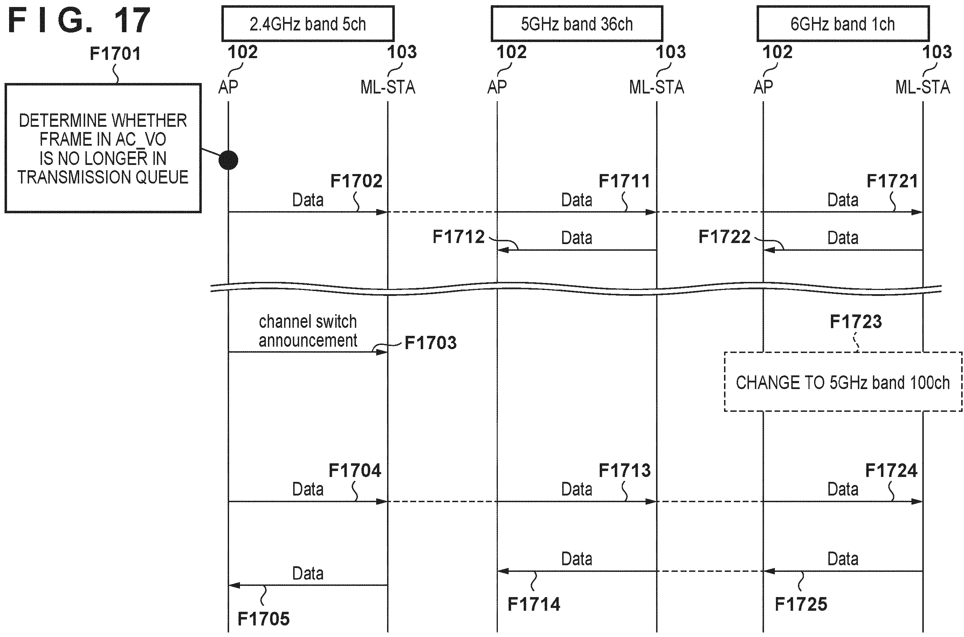

Processing for returning the frequency band used in the multi-link communication between the AP 102 and the ML-STA 103 to its original frequency band after a frame in the AC_VO category is no longer in the transmission queue of the AP 102 will be described next with reference to FIG. 17. Even after a frame in the AC_VO category is no longer in the transmission queue due to the application that transmits and receives data bidirectionally in real time no longer being used or the like, communication with the ML-STA 103 can be continued without changing the frequency band of the link. On the other hand, it is also possible to change back to the original frequency band and change to synchronous mode in response to the communication conditions in the frequency band being congested or the like.

FIG. 17 is a sequence chart illustrating processing for re-changing a frequency band used based on a type of transmitted data (access category) in the present embodiment. First, the multi-link communication control unit 206 of the AP 102 determines whether a frame in the AC_VO category is no longer in the transmission queue (F1701). The multi-link communication control unit 106 makes this determination using, as a condition, no frame in the AC_VO category being in the transmission queue for a pre-set period of time (e.g., 300 seconds), for example. Accordingly, the communication mode control unit 207 of the AP 102 determines that the condition for changing the communication mode is satisfied according to the communication conditions. The subsequent processing (F1702 to F1725) is similar to that described in the first embodiment with reference to FIG. 12 and will therefore not be described.

In this manner, in the present embodiment, if, when an AP and an STA that support multi-link communication are performing multi-link communication in the synchronous mode, the real-time transmission and reception of data bidirectionally is started, the frequency band used is changed to a frequency band in which multi-link communication can be performed in the asynchronous mode, which enables simultaneous transmission and reception. This makes it possible to prevent affecting the use of the application that transmits and receives data bidirectionally in real time, even when performing multi-link communication in the synchronous mode.

### Fourth Embodiment

The present embodiment is an embodiment concerning processing performed when using an application that transmits and receives data bidirectionally in real time, in a state where an AP and a ML-STA are performing multi-link communication using a frequency band in which transmission and reception can be executed simultaneously. The configuration of the wireless communication system, and the configurations of the AP 102, the ML-STA 103, and the Non-ML-STA 104, are similar to those of the first embodiment, and will therefore not be described here. Similar to the third embodiment, the present embodiment will describe an example of using an access category, as defined in IEEE 802. 11e, as the type of the transmitted data.

### Processing Based on Type of Transmitted Data

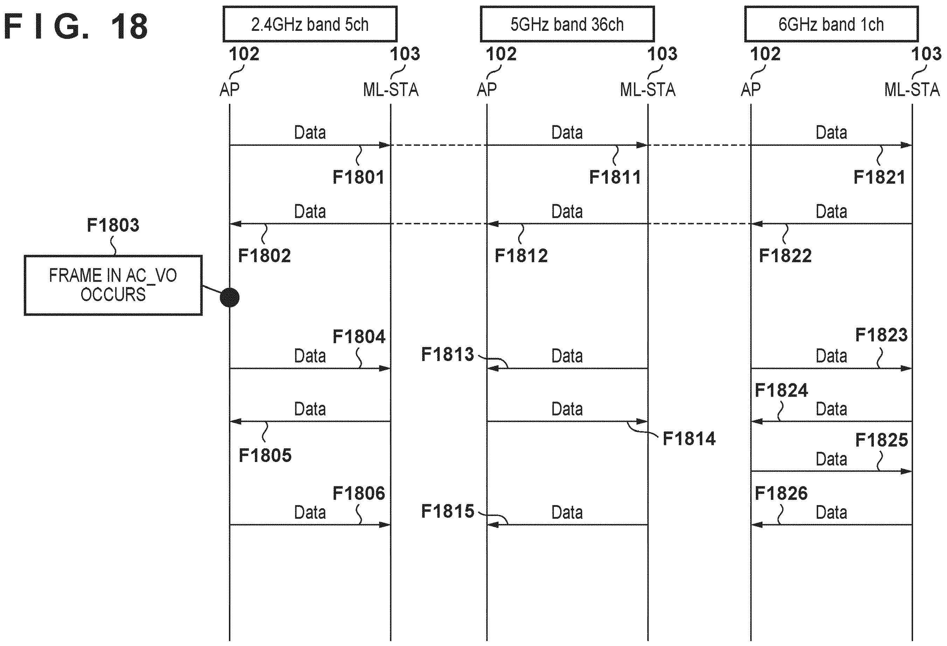

Processing according to the type of transmitted data after the AP 102 and the ML-STA 103 establish multi-link communication will be described with reference to FIG. 18. FIG. 18 is a sequence chart illustrating processing based on a type of transmitted data in the present embodiment. The AP 102 and the ML-STA 103 are assumed to be communicating in the synchronous mode, using channel 5 in the 2.4 GHz band, channel 36 in the 5 GHz band, and channel 1 in the 6 GHz band as links ((F1801, F1802, F1811, F1812, F1821, and F1822). It is assumed here that the AP 102 and the ML-STA 103 are executing applications that transmit and receive data bidirectionally in real time. It is also assumed that "AC_VO" (a voice data access category) is set in the multi-link communication control unit 206 of the AP 102 as an access category serving as a condition for changing to the asynchronous mode. AC_VO is the access category having the highest transmission priority.

Assume that in F1803, data addressed to the ML-STA 103, generated by the application that transmits and receives data bidirectionally in real time, has entered the transmission queue within the communication unit 307 of the AP 102 as a frame in the AC_VO category. Based on the access category of the data addressed to the ML-STA 103 (the transmitted data), the multi-link communication control unit 206 of the AP 102 detects that the transmitted data is data of a specific type that satisfies a condition pertaining to changing the communication mode. In this case, the communication mode control unit 207 determines that the condition pertaining to changing the communication mode is satisfied.

The multi-link communication control unit 206 of the AP 102 determines the frequency band used for the link such that the frequency intervals between the links become greater than both F_{AP} and F_{ML-STA}. In this example, multi-link communication is already being performed using a frequency band in which transmission and reception can be executed simultaneously, and thus the multi-link communication control unit 206 does not change the frequency band of the link. The AP 102 continues transmitting and receiving data through multi-link communication using a mode in which data can be transmitted and received to and from the ML-STA 103 simultaneously (F1804 to F1806, F1813 to F1815, and F1823 to F1826).

### Changing Frequency Band Used

Even after a frame in the AC_VO category is no longer in the transmission queue, the AP 102 can continue communicating with the ML-STA 103 without changing the frequency band of the link. On the other hand, the AP 102 can also change the frequency band and change to synchronous mode in response to the communication conditions in the frequency band being congested or the like. The processing for returning to the synchronous mode is similar to that described in the third embodiment with reference to FIG. 17 and will therefore not be described.

In this manner, in the present embodiment, processing can be performed appropriately when starting to use an application that transmits and receives data bidirectionally in real time, when an AP and an STA that supports multi-link are performing multi-link communication using a frequency band in which transmission and reception can be executed simultaneously.

### Other Embodiments

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2020-132538, filed August 4, 2020, and the entire content thereof is hereby incorporated by reference herein.

## Claims

1. A communication device compliant with an IEEE 802.11 series standard, the communication device **characterized by** comprising:
communication means for communicating in a communication mode among a first mode, in which transmission and reception are performed independently over each of frequency bands, and a second mode, in which transmission or reception is performed simultaneously over each of the frequency bands;
judgment means for judging whether a predetermined condition pertaining to changing the communication mode is satisfied; and
determination means for, when the judgment means judges that the predetermined condition is satisfied, determining at least one frequency band to be used for communication in the communication mode after the changing,
wherein when the judgment means judges that the predetermined condition is satisfied while the communication means is communicating with a first other communication device using each frequency band of a plurality of frequency bands in the first mode or the second mode, the determination means determines, based on the plurality of frequency bands, a plurality of frequency bands for performing communication in the communication mode after the changing, and the communication means communicates with the first other communication device in the communication mode after the changing using the plurality of frequency bands determined.

2. The communication device according to claim 1, **characterized in that** when a frequency interval between two frequency bands among the plurality of frequency bands is smaller than a predetermined interval, the communication means communicates with the first other communication device over the two frequency bands in the second mode, and when the frequency interval between the two frequency bands is at least the predetermined interval, the communication means communicates with the first other communication device over the two frequency bands in the first mode or the second mode.

3. The communication device according to claim 2, **characterized in that** the predetermined interval is a frequency interval value necessary for both the communication device and the first other communication device to transmit and receive simultaneously over the two frequency bands.

4. The communication device according to claim 2 or 3, **characterized in that** the judgment means judges that the predetermined condition is satisfied when a second other communication device that does not support communication using a plurality of frequency bands connects over a first frequency band, among the plurality of frequency bands, over which the communication means is communicating with the first other communication device in the second mode, and
when a frequency interval between the first frequency band and at least one frequency band among the plurality of frequency bands that is adjacent to the first frequency band is smaller than the predetermined interval, the determination means changes the at least one frequency band that is adjacent such that the frequency interval between the first frequency band and the at least one frequency band that is adjacent is at least the predetermined interval, and determines to use the plurality of frequency bands changed.

5. The communication device according to claim 4, **characterized in that** the judgment means judges that the predetermined condition is satisfied according to communication conditions when the second other communication device disconnects from the communication device over the first frequency band while the communication means is communicating with the first other communication device in the communication mode after the changing using the plurality of frequency bands changed, and
the determination means determines to use a plurality of frequency bands in which the at least one frequency band that is adjacent has been restored to the frequency band from before the change.

6. The communication device according to claim 2 or 3, **characterized in that** the judgment means judges that the predetermined condition is not satisfied when a second other communication device that does not support communication using a plurality of frequency bands connects over a second frequency band, among the plurality of frequency bands, over which the communication means is communicating with the first other communication device in the first mode.

7. The communication device according to claim 6, **characterized in that** the judgment means judges that the predetermined condition is satisfied according to communication conditions when the second other communication device disconnects from the communication device over the second frequency band after the second other communication device connects over the second frequency band, and
the determination means changes the at least one frequency band among the plurality of frequency bands that is adjacent to the second frequency band such that a frequency interval between the second frequency band and the at least one frequency band that is adjacent is smaller than the predetermined interval, and determines to use the plurality of frequency bands changed.

8. The communication device according to claim 2 or 3, **characterized by** further comprising:
detection means for detecting whether data generated for transmission to the first other communication device is data of a specific type,
wherein the judgment means judges that the predetermined condition is satisfied when the detection means detects that the data is data of the specific type while the communication means is communicating with the first other communication device over at least one frequency band among the plurality of frequency bands in the second mode, and
the determination means changes at least one frequency band among the plurality of frequency bands such that when a frequency interval of each frequency band among the plurality of frequency bands is smaller than the predetermined interval, the frequency interval of each frequency band becomes at least the predetermined interval, and determines to use the plurality of frequency bands changed.

9. The communication device according to claim 8, **characterized in that** the judgment means judges that the predetermined condition is satisfied according to communication conditions when the detection means detects that the data is not data of the specific type while the communication means is communicating with the first other communication device in the communication mode after the changing using the plurality of frequency bands changed, and
the determination means determines to use a plurality of frequency bands in which the at least one frequency band has been restored to the frequency band from before the change.

10. The communication device according to claim 8 or 9, **characterized in that** the detection means detects whether the data is data of the specific type based on an access category defined in IEEE 802.11e.

11. A method for controlling a communication device compliant with an IEEE 802.11 series standard, the method **characterized by** comprising:
a communication step of communicating in a communication mode among a first mode, in which transmission and reception are performed independently over each of frequency bands, and a second mode, in which transmission or reception is performed simultaneously over each of the frequency bands;
a judgment step of judging whether a predetermined condition pertaining to changing the communication mode is satisfied; and
a determination step of, when the predetermined condition is judged to be satisfied in the judgment step, determining at least one frequency band to be used for communication in the communication mode after the changing,
wherein when the predetermined condition is judged to be satisfied in the judgment step during communication with a first other communication device using each frequency band of a plurality of frequency bands in the first mode or the second mode in the communication step, in the determination step, based on the plurality of frequency bands, a plurality of frequency bands for performing communication in the communication mode after the changing are determined, and
after the determining, in the communication step, communication with the first other communication device is performed in the communication mode after the changing using the plurality of frequency bands determined.

12. A program that causes a computer to function as the communication device according to any one of claims 1 to 10.
